# NEUE EUROPÄISCHE PATENTSCHRIFT

(11) **EP 0 846 715 B2**
(45) Veröffentlichungstag und Bekanntmachung des Hinweises auf die Entscheidung über den Einspruch: **03.12.2003**
(45) Hinweis auf die Patenterteilung: 09.02.2000
(21) Anmeldenummer: 97117643.3
(22) Anmeldetag: 11.10.1997
(51) Int. Cl.: C08G 77/24, C09D 183/08, D06M 15/657

(54) **Verfahren zur Herstellung fluoralkyl-funktioneller Organopoly-siloxan-haltiger Zusammensetzungen auf Alkolholbasis und Verwendung des Verfahrensproduktes**
Process for the prepatation of alcohol-based fluoroorgano-functional siloxane-containing compositions and use of the product of production
Procédé pour la préparation des compositions à base d'alcool contenant des siloxanes et des fonctions fluoroorganiques et utilisation de la composition

(30) Priorität: 03.12.1996 DE 19649954
(43) Veröffentlichungstag der Anmeldung: 10.06.1998
(73) Patentinhaber: Degussa AG, 40474 Düsseldorf (DE)
(72) Erfinder: Jenkner, Peter, Dr., 79618 Rheinfelden (DE); Frings, Albert-Johannes, Dr., 79618 Rheinfelden (DE); Horn, Michael, Dr., 79618 Rheinfelden (DE); Just, Eckhard, 79618 Rheinfelden (DE); Monkiewicz, Jaroslaw, 79618 Rheinfelden (DE); Standke, Burkhard, Dr., 79540 Lörrach (DE)

(56) Entgegenhaltungen:
- EP-A- 0 548 775
- EP-A- 0 629 673
- EP-A- 0 657 393
- EP-A- 0 738 771
- EP-A- 0 799 873
- WO-A-96/06895
- WO-A-96/106895
- US-A- 5 266 222

## Beschreibung

Die Erfindung betrifft ein Verfahren zur Herstellung fluoralkyl-funktioneller Organopolysiloxan-haltiger Zusammensetzungen auf Alkoholbasis, sowie die Verwendung des Verfahrensproduktes.

Organosilane der allgemeinen Formel R'-Si (R")₃, mit R' als fluoriertem organischen Rest und R" als Chlor- oder Methoxy- bzw. Ethoxy-Rest, finden vielfältige Anwendungen, z. B. zum Aufbringen hydrophob sowie oleophob wirkender Schichten auf Oberflächen. Solche Beschichtungen bzw. Imprägnierungen können z. B. über Tauch-, Tränk-, Sprüh- oder Bewalzungsvorgänge auf dem entsprechenden Werkstück erzeugt werden.

Es ist auch bekannt, daß öl- und wasserabweisende Beschichtungen von Oberflächen, meist Glasoberflächen, mit Hilfe von Fluoralkylalkoxysilanen hergestellt werden. Die Beschichtungen können beispielsweise als schmutzabweisende Ausrüstung von Flachglas verwendet werden. Die beschriebenen Verfahren basieren auf Sol-Gel-Prozessen, wobei zusammen mit dem Fluoralkylalkoxysilan feinste anorganische Partikel er zeugt und eingesetzt werden. Die Applikation solcher Systeme ist technisch aufwendig und verwendet meist komplexe organische Lösemittelgemische und Zusatzstoffe. Darüber hinaus enthalten solche Systeme Chlor und sind ferner nur über einen relativ kurzen Zeitraum einsatzfähig (EP-OS 0 658 525, EP-OS 0 629 673, US 5 424 130).

Da die genannten Verfahren auf den anwendungstechnisch und ökonomisch aufwendigen Sol-Gel-Prozessen basieren, ist deren kommerzielle Verwertung daher bis heute auf Nischenbereiche beschränkt. Zudem bestehen bezüglich der Verarbeitbarkeit und damit der nachträglichen Wirksamkeit solcher Fluoralkylsilan-haltigen Zubereitungen auf einer Substratoberfläche enge zeitliche Grenzen, die sich ebenfalls auf eine breitere praktische Nutzung negativ auswirken. Neben dem teilweisen bis völligen Verlust der Haftwirkung kann es zu einer langsamen Phasentrennung bis zum schichtförmigen Absetzen einer Fluoralkylsilan-haltigen Phase kommen.

Somit wirken sich bei solchen Verfahren die komplizierten Applikationsverfahren und darüber hinaus auch die Verwendung von Lösemitteln, wie chlorierte Kohlenwasserstoffe oder Fluorkohlenwasserstoffe, nachteilig aus (EP-OS 0 491 251, EP-OS 0 493 747). (WO 96/06895 offenbart ein Beschichtungsmittel, das Copolysiloxane enthält, welche neben Fluororganogruppen auch Organogruppen mit benetzenden Eigenschaften tragen, wobei solche Gruppen auch an die Substratoberfläche anbinden sollen. Diesen Beschichtungsmitteln werden u.a. Aminoalkylsilane sowie Ethanolamin als basische Substanzen zugrundegelegt).

Bei den bekannten lösemittelbasierenden Systemen ist ferner zu beachten,daßeinige Systemezwar im nicht hydrolysierten Zustand langzeitstabil sind sich jedoch in hydrolysierter Form, bedingt durch die fortschreitende Polykondensation der Silanolfunktionen, durch eine auf maximal einige Tage begrenzte Wirksamkeit auszeichnen. Durch eine fortlaufende Verringerung des Gehaltes an Silanolgruppen reduziert sich ferner der Anteil möglicher chemischer Bindung zu einer Substratoberfläche, der sich als Konsequenz in unbefriedigender Haftung des Überzuges an der Substratoberfläche äußert.

Es bestand daher die Aufgabe, silanbasierende Systeme in einfacher und wirtschaftlicher Weise herzustellen, die im wesentlichen frei von Chlor sind, ferner über einen längeren Zeitraum hinreichende Stabilität besitzen und mit denen man in einem einfach auszuführenden Imprägnierverfahren eine gleichzeitig hydrophobe wie auch oleophobe Schicht auf Substratoberflächen erzeugen kann.

Die gestellte Aufgabe wird erfindungsgemäß entsprechend den Angaben der Patentansprüche gelöst.

Überraschenderweise wurde gefunden, daß Organosiloxan-haltige Zusammensetzungen auf Alkoholbasis, welche Si-gebundene Fluoralkyl-Funktionen enthalten, dann in einfacher und wirtschaftlicher Weise als Chlor-freie, homogene, klare und über mehrere Monate stabile Lösungen zugänglich sind, wenn man mindestens ein fluoralkyl-funktionelles Alkoxysilan aus der Reihe lineares Perfluoralkylalkoxysilan, Tridecafluor-1,1,2,2-tetrahydro-octyltrimethoxysilan, Tridecafluor-1,1,2,2-tetrahydrooctyltriethoxysilan, Heptadecafluor-1,1,2,2-tetrahydrodecyltriethoxysilan oder der allgemeinen Formel

R¹-Y-(CH₂)₂SiHₓ(R²)_{y}(OR)_{3-x-y} (I),

worin R¹ eine mono-, oligo- oder perfluorierte Alkylgruppe mit 1 bis 9 C-Atomen oder eine mono-, oligo- oder perfluorierte Arylgruppe, oder R^{f}CH₂CH₂(C=O)- mit R^{f} = CₙF₂ₙ₊₁ und n = 2 bis 18 ist, Y eine CH₂-, O- oder S-Gruppe, R² eine lineare, verzweigte oder cyclische Alkylgruppe mit 1 bis 8 C-Atomen oder eine Arylgruppe und R eine lineare, verzweigte oder cyclische Alkylgruppe mit 1 bis 8 C-Atomen oder eine Arylgruppe darstellen und x= 0, 1 oder 2 und y = 0, 1 oder 2 mit (x+y)≤2 sind, unter guter Durchmischung in einem alkoholischen Medium, das neben Wasser (i) eine schwache Säure ausgewählt aus Ameisensäure, Propionsäure, Zitronen säure oder einer mehrbasischen Säure, oder (ii) ein Alkylamin der allgemeinen Formel H_{3-z}NR³_{z} worin R³ eine lineare, verzweigte oder cyclische Alkylgruppe mit 1 bis 8 C-Atomen oder eine lineare, verzweigte oder cyclische Aminoalkyl-Gruppe mit 1 bis 8 C-Atomen oder eine Arylgruppe darstellt, z = 1, 2 oder 3 ist, als schwache Base, oder (iii) eine schwache einoder mehrbasische Säure und ein Alkylamin der allgemeinen Formel H_{3-z}NR³_{z}, worin R³ und z die zuvor angegebene Bedeutung haben, oder (iv) ein saures oder basisches Salz enthält, bei einer Temperatur im Bereich zwischen 0 und 120 C über einen Zeitraum von 0,5 bis 24 Stunden gezielt hydrolysiert werden, und wobei man das Wasser und das Alkoxysilan in einem molaren Verhältnis von 2 bis 500 : 1 einsetzt.
Die erfindungsgemäß hergestellten Zusammensetzungen lassen sich ferner in einfacher Weise mit hervorragender Wirkung zur gleichzeitigen Hydrophobierung und Oleophobierung von Substratoberflächen einsetzen.

Gegenstand der vorliegenden Erfindung ist daher ein Verfahren zur Herstellung einer lagerstabilen, hydrolysierte fluoalkylfunktionelle Organosiloxane mit oligomerer Struktur enthaltende Zusammenmensetzung auf Alkoholbasis, die im wesentlichen frei von Chlor ist, wobei mindestens ein Fluororganofunktionelles Alkoxysilan aus der Reihe lineares Perfluoralkylalkoxysilan, Tridecafluor-1,1,2,2-tetrahydrooctyltrimethoxysilan, Tridecafluor-1,1,2, 2-tetrahydrooctyltriethoxysilan, Heptadecafluor-1,1,2,2-tetrahydrodecyltriethoxysilan oder der allgemeinen Formel I

R¹-Y-(CH₂)₂SiHₓ(R²)_{y}(OR)_{3-x-y} (I),

worin
R¹ eine mono-, oligo- oder perfluorierte Alkyl-Gruppe mit 1 bis 9 C-Atomen oder eine mono-, oligooder perfluorierte Aryl-Gruppe oder R^{f}CH₂CH₂ (C=O)- mit R^{f}= CₙF₂ₙ₊₁ und n = 2 bis 18,
Y eine CH₂-, O- oder S-Gruppe, R² eine lineare, verzweigte oder cyclische Alkyl-Gruppe mit 1 bis 8 C-Atomen oder eine Aryl-Gruppe und R eine lineare, verzweigte oder cyclische Alkyl-Gruppe mit 1 bis B C-Atomen oder eine Aryl-Gruppe darstellen und x= 0, 1 oder 2 und y = 0, 1 oder 2 mit (x+y)≤2 sind,
unter guter Durchmischung in einem alkoholischen Medium, das neben Wasser
(i) eine schwache Säure ausgewählt aus Ameisensäure, Propionsäure, Zitronensäure oder einer mehrbasischen Säure, oder
(ii) ein Alkylamin der allgemeinen Formel

   H_{3-z}NR³ _{z}

   worin R³ eine lineare, verzweigte oder cyclische Alkylgruppe mit 1 bis 8 C-Atomen oder eine lineare, verzweigte oder cyclische Aminoalkyl-Gruppe mit 1 bis 8 C-Atomen oder eine Arylgruppe darstellt, z = 1, 2 oder 3 ist, als schwache Base, oder
(iii) eine schwache ein- oder mehrbasische Säure und ein Alkylamin der allgemeinen Formel

   H_{3-z}NR³ _{z},

   worin R³ und z die zuvor angegebene Bedeutung haben, oder
(iv) ein saures oder basisches Salz enthält,
bei einer Temperatur im Bereich zwischen 0 und 120 C über einen Zeitraum von 0,5 bis 24 Stunden gezielt hydrolysiert werden, und wobei man das Wasser und das Alkoxysilan in einem molaren Verhältnis von 2 bis 500 : 1 einsetzt.

Die erfindungsgemäß hergestellten Zusammensetzungen weisen vorzugsweise einen pH-Wert zwischen 2 und 12, besonders vorzugsweise einen pH-Wert zwischen 3 bis 10, auf und besitzen geeigneterweise eine Viskosität von weniger als 10 000 mPa•s. Der Gehalt an Alkoholen in erfindungsgemäßen Zusammensetzungen beträgt vorzugsweise 40 bis 99,999 Gew.-%, bezogen auf die gesamte Zusammensetzung, wobei diese Fluoralkylfunktionelle Organosiloxane vorzugsweise in Mengen von 0,001 bis 30 Gew.-%, besonders vorzugsweise 0,01 bis 5 Gew.-%, und ganz besonders vorzugsweise 0,1 bis 2 Gew.-%, bezogen auf die Zusammensetzung, enthält.

Die Dosierung des Fluoralkyl-funktionellen Organosilans der allgemeinen Formel I erfolgt beim erfindungsgemäßen Verfahren bevorzugt portionsweise mit zeitlichen Unterbrechungen. Man kann den Vorgang der Dosierung aber auch kontinuierlich mit zeitlichen Unterbrechungen durchführen oder die diskontinuierliche und kontinuierliche Vorgehensweise der Dosierung miteinander in geeigneter Weise kombinieren.

Die Umsetzung wird in einem Temperaturbereich zwischen 0 und 120 °C, vorzugsweise in einem Temperaturbereich zwischen 10 und 80 °C, besonders vorzugsweise zwischen 20 und 60 °C, durchgeführt. Geeigneterweise erfolgt die Umsetzung unter Rühren.

Beim erfindungsgemäßen Verfahren stellt man den pH-Wert zwischen 2 und 12 im Reaktionsmedium durch Einsatz einer schwachen Säure ausgewählt aus Ameisensäure, Propionsäure, Zitronensäure oder einer mehrbasigen Säure oder einer schwachen Base oder einer schwachen einoder mehrbasigen Säure und einer schwachen Base oder eines sauren oder basischen Salzes ein.

Geeigneterweise setzt man beim erfindungsgemäßen Verfahren als schwache ein Alkylamin der allgemeinen Formel III

H_{3-z}NR³ _{z} (III),

worin R³ eine lineare, verzweigte oder cyclische Alkyl-Gruppe mit 1 bis 8 C-Atomen oder eine lineare, verzweigte oder cyclische Aminoalkyl-Gruppe mit 1 bis 8 C-Atomen oder eine Aryl-Gruppe darstellt, z = 1, 2 oder 3 ist und Gruppen R³ gleich oder verschieden sind, beispielsweise Mono-, Di- oder Trialkylamine, wobei als Alkyl-Gruppe solche mit 1 bis 3 C-Atomen bevorzugt sind, ein.

Für die Kombination einer schwachen Base mit einer schwachen Säure kann man beim erfindungsgemäßen Verfahren Ameisensäure, Essigsäure, Propionsäure oder Zitronensäure, einsetzen. Bei gleichzeitigem Einsatz schwacher Säuren und schwacher Basen ist es beim erfindungsgemäßen Verfahren nicht erforderlich, ein äquimolares Verhältnis zwischen Säure und Base einzuhalten.

Beim erfindungsgemäßen Verfahren kann man als saure Salze beispielsweise Alkalihydrogensulfat oder -dihydrogenphosphat oder Aluminiumacetat, oder als basische Salze beispielsweise Magnesiumhydroxid oder Alkaliacetat oder Alkalihydrogencarbonat oder Alkalicarbonat, einsetzen.

Als Reaktionsmedium verwendet man beim erfindungsgemäßen Verfahren vorzugsweise den zur Alkoxy-Gruppe des eingesetzten Organosilans korrespondierenden Alkohol, wobei man als Alkohol geeigneterweise Methanol, n-Propanol, i-Propanol, n-Butanol, i-Butanol, t-Butanol und/oder 2-Methoxyethanol, insbesondere aber Ethanol einsetzt.

Darüber hinaus bevorzugt man beim erfindungsgemäßen Verfahren lineare Perfluoralkylalkoxysilane, wie z. B. Perfluordodecyl-/Perfluordecyl-/Perfluoroctyltrialkoxysilane, insbesondere Perfluoroctyltriethoxysilan, sowie solche Fluoralkyl-funktionelle Organosilane, die gemäß Formel I CF₃(CF₂)₇-, CF₃ (C₆H₄)-, C₆F₅- oder R^{f}CH₂CH₂(C=O)- mit R^{f} = CₙF₂ₙ₊₁ und n = 2 bis 18 als Gruppe R¹ enthalten, beispielsweise F₁₃C₆(CH₂)₂Si(OC₂H₅)₃, besonders bevorzugt sind Tridecafluor-1,1,2,2-tetrahydrooctyltrimethoxysilan sowie Tridecafluor-1,1,2,2-tetrahydrooctyltriethoxysilan sowie 3,3,4,4,5,5,6,6,7,7,8,8,9,9,10,10,10-Heptadecafluor-1, 1,2,2-tetrahydrodecyltriethoxysilan oder entsprechende Gemische.

Nach dem erfindungsgemäßen Verfahren hergestellte Produkte sind stabile und in der Regel klare Lösungen. Die Zusammansetzungen lassen sich geeigneterweise mit Alkoholen in jedem Verhältnis verdünnen. Darüber hinaus kann eine Zusammensetzung auch Wasser in Mengen bis zu 5 Gew.-% enthalten.

Erfindungsgemäß erhaltene Fluoralkyl-funktionelle Organosiloxane enthalten aufgrund ihrer oligomeren Struktur bevorzugt eine hohe Konzentration an Silanolfunktionen, die sie in hervorragender Weise zur Reaktion mit hydroxylgruppenhaltigen Substratoberfächen befähigt. Beschichtungen und Imprägnierungen mit diversen Substraten ergaben ausgezeichnete ölund gleichzeitig wasserabweisende Eigenschaften, -auch nach Temperatur-, Tensid- und UV-Behandlung, vgl. Beispiele. In entsprechenden Untersuchungen konnte zudem auf verschiedenen Materialien gezeigt werden, daß auch nach > 6 Monaten keine Verringerung per Wirksamkeit bzw. eine Destabitisierung der Zusammensetzungen erkennbar war.

Die Verwendung der erfindungsgemäß hergestellten Zusammensetzungen erfolgt mit deutlichen Vorteilen gegenüberden eingangs beschriebenen Produkten. Bei Anwendung der Zusammensetzung kann man in einfacher und hervorragender Weise zugleich eine hydrophobierende, oleophobierende, schmutz- und farbabweisende Wirkung auf den unterschiedlichsten Substratoberflächen, insbesondere auf Glas - z. B. Flachglas, Glasfasern, Glasperlen, Füllstoffen und Pigmenten, Metallen, Kunststoffen, Lacken und Farben, Textilfasern-einschließlich Baumwolle, Holz, Papier, Minaralfasern sowie mineralischen Baustoffen - z. B. Kalksandstein, Beton, Ziegel oder Keramik, erzielen. Darüber hinaus können die erfindungegemäßen Zusammensetzungen auch als Trennmittel, als Vernetzer, als Haftvermittler, insbesondere für Fluorpolymere, wie z. B. Teflon oder auf Fluorpolymeren basierenden Lakken, sowie als Zusatzstoffe für Farben und Lacke Verwendung finden. Entsprechende Vorfahren zur Oberflächenbehandlung unter Einsatz Zusammensetzungen können im allgemeinen mit geringem zeitlichen und technischen Aufwand durchgeführt werden.

Gegenstand der vorliegenden Erfindung ist daher auch die Verwendung der erfindungsgemäßen Fluoralkyl-funktionellen Organosiloxan-haltigen Zusammensetzungen auf Alkoholbasis für die gleichzeitige Hydrophobierung und Oleophobierung sowie zur schmutz- und farbabweisenden Ausrüstung von Oberflächen, von Kunststoffen, von Metallen, von mineralischen Baustoffen, für den Schutz von Bauten und Fassaden, fürdie Beschichtung von Glasfasern, für die Silanisierungvon Füllstoffen und Pigmenten, für die Verbesserung der rheologischen Eigenschaften von Polymerdispersionen und Emulsionen, für die Hydrophobierung und Oleophobierung sowie zur schmutz- und farbabweisenden Ausrüstung von Textilien, Leder, Zellulose- und Stärkeprodukten sowie als Trennmittel, als Vernetzer, als Haftvermittler sowie als Zusatzstoffe für Farben und Lacke.

Die Erfindung wird durch die folgenden Beispiele näher erläutert, ohne den Gegenstand der vorliegenden Erfindung zu beschränken:

### Beispiele

### Beispiel 1:

In einem 250 ml Becherglas werden bei Raumtemperatur 10 g H₂O (0,56 mol) unter Rühren mit 5 g HCOOH (rein; 0,11 mol) vermischt und danach 160 g Ethanol (3,5 mol) zugegeben, wobei sich ein pH-Wert von ca. 3,5 - 4 einstellt. Hierauf werden 10 g VPS 8261 (3,3,4,4,5,5,6,7,7,8,8,8-Tridecafluor-1,1,2,2-tetrahydrooctyltriethoxysilan) zugetropft (0,02 mol) und anschließend 5 h gerührt (keine weitere pH-Änderung). Danach wird mit 915 g Ethanol (19,9 mol) auf ein Gesamtgewicht von 1 000 g aufgefüllt.
Man erhält eine klare, farblose Lösung mit einem Gehalt von 1,0 Gew.-% VPS 8261, die eine Lagerstabilität von mindestens 6 Monaten aufweist.

### Vergleichsbeispiel:

Man verfährt wie in Beispiel 1 beschrieben, ersetzt jedoch HCOOH durch 1-molare HCl (pH ≤ 1), so erfolgt beginnend nach 48 bis 72 h eine milchige Eintrübung sowie darauf innerhalb von 2 Wochen eine deutliche Phasentrennung. Nach dieser Zeit offenbart sich die Zusammensetzung nur noch leicht trübe, jedoch mit einer durchscheinenden, wachsartigen Schicht, die sich an Boden und Wänden von sowohl Glas- als auch Kunststoffbehältem absetzt.

### Beispiel 2:

In einem 250 ml Becherglas werden bei Raumtemperatur 10 g H₂O (0,56 mol) unter Rühren mit 4,0 g CH₃COOH (rein; 0,09 mol) vermischt und 2,0 g (rein; 0,03 mol) Isobutylamin zugegeben, wobei sich ein pH-Wert von 4,5 - 5 einstellt. Danach wird mit 50 g Ethanol (1,1 mol) aufgefüllt, 5 g 3,3,4,4,5,5,6,6,7,7,8,8,9,9,10,10, 10-Heptadecafluor-1,1,2,2-tetrahydrodecyltriethoxysilan zugetropft (0,008 mol) und anschließend 5 h gerührt (keine weitere pH-Änderung). Hierauf wird mit 429 g Ethanol (94,4 mol) auf ein Gesamtgewicht von 500 g aufgefüllt.
Man erhält eine klare, farblose Lösung mit einem Gehalt von 1,0 Gew.-% 3,3,4,4,5,5,6,6,7,7,8,8,9,9,10,10, 10-Heptadecafluor-1,1,2,2-tetrahydrodecyltriethoxysilan, die eine Lagerstabilität von mindestens 6 Monaten aufweist.

### Beispiel 3

Mit den Lösungen der Beispiele 1 und 2 wurden Beschichtungen von Glasplatten, Stahlplatten, Aluminiumfolien, Kupferplatten, Kartonagen, Papier, Polyester, bzw. Imprägnierungen von Zellstoff, Holz, Leder und Baumwolle durchgeführt Dazu wurden die Substratproben in die anwendungsfertigen Lösungen der Beispiele 1 bis 4 für ca. 5 min. eingetaucht und nach Entnahme die Lösemittel bei 120°C in einem Trockenschrank über eine Zeit von ca. 30 Minuten entfernt.
Danach zeigten die Substratproben ein signifikantes hydro- und oleophobes Verhalten. Dies offenbarte sich u. a durch folgende Eigenschaften:
Abperleffekt von Thermoöl, Siliconöl, Wasser, Randwinkel > 100 °, "anti-graffiti", "anti-soiling", "anti-fouling". Diese Eigenschaften bleiben auch nach mehrmonatiger Lagerung bei Raumtemperatur, wechselnden Feuchtegehalten und unter Tageslichteinfluß erhalten.

## Patentansprüche

1. Verfahren zur Herstellung einer lagerstabilen, hydrolysierte fluoralkylfunktionelle Organosiloxane mit oligomerer Struktur enthaltenden Zusammensetzung auf Alkoholbasis, die im wesentlichen frei von Chlor ist, wobei mindestens ein fluoralkyl-funktionelles Alkoxysilan aus der Reihe lineares Perfluoralkylalkoxysilan, Tridecafluor-1,1,2,2-tetrahydrooctyltrimethoxysilan, Tridecafluor-1,1,2,2-tetrahydrooctyltriethoxysilan, Heptadecafluor-1,1,2,2-tetrahydrodecylthethoxysilan oder der allgemeinen Formel
R¹-Y-(CH₂)₂SiHₓ(R²)_{y}(OR)_{3-x-y} (I),
worin
R¹ eine mono-, oligo- oder perfluorierte Alkylgruppe mit 1 bis 9 C-Atomen oder eine mono-, oligo- oder perfluorierte Arylgruppe, oder R^{f}CH₂CH₂(C=O)- mit R^{f} = CₙF₂ₙ₊₁ und n = 2 bis 18 ist,
Y eine CH₂-, O- oder S-Gruppe, R² eine lineare, verzweigte oder cyclische Alkylgruppe mit 1 bis 8 C-Atomen oder eine Arylgruppe und R eine lineare, verzweigte oder cyclische Alkylgruppe mit 1 bis 8 C-Atomen oder eine Arylgruppe darstellen und x= 0, 1 oder 2 und y = 0, 1 oder 2 mit (x+y)≤2 sind,
unter guter Durchmischung in einem alkoholischen Medium, das neben Wasser
(i) eine schwache Säure ausgewählt aus Ameisensäure, Propionsäure, Zitronensäure oder einer mehrbasischen Säure, oder
(ii) ein Alkylamin der allgemeinen Formel
H_{3-z}NR³_{z}
worin R³ eine lineare, verzweigte oder cyclische Alkylgruppe mit 1 bis 8 C-Atomen oder eine lineare, verzweigte oder cyclische Aminoalkyl-Gruppe mit 1 bis 8 C-Atomen oder eine Arylgruppe darstellt, z = 1, 2 oder 3 ist, als schwache Base, oder
(iii) eine schwache ein- oder mehrbasische Säure und ein Alkylamin der allgemeinen Formel H_{3-z}NR³_{z}, worin R³ und z die zuvor angegebene Bedeutung haben, oder
(iv) ein saures oder basisches Salz enthält,
bei einer Temperatur im Bereich zwischen 0 und 120 C über einen Zeitraum von 0,5 bis 24 Stunden gezielt hydrolysiert werden, und wobei man das Wasser und das Alkoxysilan in einem molaren Verhältnis von 2 bis 500 : 1 einsetzt.

2. Verfahren nach Anspruch 1,**dadurch gekennzeichnet, daß** man den pH-Wert im Reaktionsmedium auf einen Wert zwischen 2 und 12 einstellt.

3. Verfahren nach einem der Ansprüche 1 oder 2, **dadurch gekennzeichnet, daß** man in der Kombination (iii) als schwache Säure Ameisensäure, Essigsäure, Propionsäure oder Zitronensäure einsetzt.

4. Verfahren nach mindestens einem der Ansprüche 1 bis 3, **dadurch gekennzeichnet, daß** man als saures Salz Alkalihydrogensulfat oder -dihydrogenphosphat oder Aluminiumacetat einsetzt.

5. Verfahren nach mindestens einem der Ansprüche 1 bis 4, **dadurch gekennzeichnet, daß** man als basisches Salz Magnesiumhydroxid oder Alkaliacetat oder Alkalihydrogencarbonat oder Alkalicarbonat einsetzt.

6. Verfahren nach mindestens einem der Ansprüche 1 bis 5, **dadurch gekennzeichnet, daß** man den zur Alkoxygruppe des eingesetzten Organosilans korrespondierenden Alkohol einsetzt.

7. Verfahren nach mindestens einem der Ansprüche 1 bis 6, **dadurch gekennzeichnet, daß** man als Alkohol Methanol, Ethanol, n-Propanol, i-Propanol, n-Butanol, i-Butanol, t-Butanol und/oder 2-Methoxyethanol einsetzt.

8. Verwendung der nach dem Verfahren gemäss einem oder mehrerer Ansprüche 1 bis 7 erhaltenen fluoralkyl-funktionellen organosiloxanhaltigen Zusammensetzungen auf Alkoholbasis für die gleichzeitige Hydrophobierung und Oleophobierung sowie zur schmutz- und farbabweisenden Ausrüstung von Oberflächen, von Kunststoffen, von Metallen, von mineralischen Baustoffen, für den Schutz von Bauten und Fassaden, für die Beschichtung von Glasfasern, für die Silanisierung von Füllstoffen und Pigmenten, für die Verbesserung der rheologischen Eigenschaften von Polymerdispersionen und Emulsionen, für die Hydrophobierung und Oleophobierung sowie zur schmutz- und farbabweisenden Ausrüstung von Textilien, Leder, Zellulose- und Stärkeprodukten sowie als Trennmittel, als Vemetzer, als Haftvermittler sowie als Zusatzstoffe für Farben und Lacke.

## Claims

1. A process for the preparation of a storage-stable alcohol-based composition which contains hydrolysed fluoroalkyl-functional organosiloxanes having an oligomeric structure and which is essentially free from chlorine,
wherein
at least one fluoroalkyl-functional alkoxysilane from the group consisting of linear perfluoroalkylalkoxysilane, tridecafluoro-1,1,2,2-tetrahydrooctyltrimethoxysilane, tridecafluoro-1,1,2,2-tetrahydrooctyltriethoxysilane and heptadecafluoro-1,1,2,2-tetrahydrodecyltriethoxysilane or of the general formula I
R¹-Y-(CH₂)₂SiHₓ(R²)_{y}(OR)_{3-x-y} (I),
in which R¹ is a mono-, oligo- or perfluorinated alkyl group having 1 to 9 C atoms or a mono-, oligo- or perfluorinated aryl group or R^{f}CH₂CH₂(C=O)- where R^{f} = CₙF₂ₙ₊₁ and n = from 2 to 18,
Y is a CH₂, O or S group, R² is a linear, branched or cyclic alkyl group having 1 to 8 C atoms or an aryl group and R is a linear, branched or cyclic alkyl group having 1 to 8 C atoms or an aryl group and x = 0, 1 or 2 and y = 0, 1 or 2, where (x+y)≤2, is subjected to controlled hydrolysis with good thorough mixing in an alcoholic medium which, in addition to water, comprises
(i) a weak acid selected from formic acid, propionic acid, citric acid or a polybasic acid, or
(ii) as weak base, an alkylamine of the general formula H_{3-z}NR³_{z}
in which R' is a linear, branched or cyclic alkyl group having 1 to 8 C atoms or a linear, branched or cyclic aminoalkyl group having 1 to 8 C atoms or an aryl group, z = 1, 2 or 3, or
(iii) a weak mono- or polybasic acid and an alkylamine of the general formula H_{3-z}NR³_{z}, in which R³ and z are as defined above, or
(iv) an acidic or basic salt,
at a temperature in the range from 0 to 120°C and over a period of from 0.5 to 24 hours, and the water and the alkoxysilane being employed in a molar ratio of from 2 to 500:1.

2. A process according to claim 1,
**characterized in that**
the pH in the reaction medium is adjusted to a value of from 2 to 12.

3. A process according to either one of claims 1 and 2,
**characterized in that**
formic acid, acetic acid, propionic acid or citric acid is employed as weak acid in the combination (iii).

4. A process according to at least one of claims 1 to 3,
**characterized in that**
alkali metal hydrogen sulphate or alkali metal dihydrogen phosphate or aluminium acetate is employed as acidic salt.

5. A process according to at least one of claims 1 to 4,
**characterized in that**
magnesium hydroxide or alkali metal acetate or alkali metal bicarbonate or alkali metal carbonate is employed as basic salt.

6. A process according to at least one of claims 1 to 5,
**characterized in that**
the alcohol corresponding to the alkoxy group of the organosilane employed is used.

7. A process according to at least one of claims 1 to 6,
**characterized in that**
methanol, ethanol, n-propanol, i-propanol, n-butanol, i-butanol, t-butanol and/or 2-methoxyethanol are/is employed as alcohol.

8. The use of an alcohol-based fluoroalkyl-functional organosiloxane-containing composition obtained according to one or more of claims 1 to 7, for simultaneous hydrophobicizing and oleophobicizing and for dirt- and colour-repellent treatment of surfaces, of plastics, of metals and of mineral building materials, for protecting buildings and facades, for coating glass fibres, for silanizing fillers and pigments, for improving the rheological properties of polymer dispersions and emulsions, for hydrophobicizing and oleophobicizing and for dirt- and colour-repellent treatment of textiles, leather and cellulose and starch products, and as a release agent, as a crosslinking agent, as an adhesion promoter or as an additive for paints and coatings.

## Revendications

1. Procédé d'obtention d'une composition contenant un siloxane fluoroorgano-fonctionnel à base d'alcool, qui est essentiellement dépourvue de chlore stable au stockage, hydrolysé ayant une structure oligomérique, dans lequel on hydrolyse d'une manière ciblée au moins un alcoxysilane fluoroorganofonctionnel de la série du perfluoroalkylalcoxysilane linéaire, du tridécafluoro-1,1,2,2-tétrahydrooctyltriméthoxysilane, du tridécafluoro-1,1,2,2-tétrahydrooctyl-triéthoxysilane, de l'heptadérafluoro-1,1,2,2-tétrahydrodécyltriéthoxysilane ou de formule générale I
R¹-Y-(CH₂)₂SiHₓ(R²)_{y}(OR)_{3-x-y} (I),
dans laquelle
R¹ est un groupe alkyle mono-, oligo- ou perfluoré ayant 1 à 9 atomes de carbone, ou un groupe aryle mono,-oligo- ou perfluoré ou R^{f}CH₂CH₂(C=O)- avec R^{f} = CₙF₂ₙ₊₁ et n = 2 à 18,
Y représente un groupe CH₂⁻, O- ou S-, R² représente un groupe alkyle linéaire, ramifié ou cyclique ayant de 1 à 8 atomes de carbone ou un groupe aryle et R représente un groupe alkyle, linéaire, ramifié ou cyclique ayant de 1 à 8 atomes de carbone ou un groupe aryle, et x = 0, 1 ou 2 et y = 0, 1 ou 2 avec (x+y)≤2,
à une température comprise entre 0 et 120°C pendant un intervalle de 0,5 à 24 heures et sous un bon mélange dans un milieu alcoolique, qui contient, outre de l'eau,
(i) un acide mono- ou polybasique faible, ou
(ii) une alkylamine de formule générale
H_{3-z}NR³_{z}
dans laquelle R³ représente un groupe alkyle linéaire, ramifié ou cyclique ayant de 1 à 8 atomes de carbone ou un groupe aminoalkyle linéaire, ramifié ou cyclique ayant de 1 à 8 atomes de carbone ou un groupe aryle, z = 1, 2 ou 3 en tant que base faible
ou
(iii) un acide mono- ou polybasique faible et une base faible de formule générale H_{3-z}NR³_{z} dans laquelle R³ et z ont les significations fournies précédemment, ou
(iv) un sel acide ou basique.
à une température comprise entre 0 et 120°C pendant 0,5 à 24 heures
l'eau utilisée et l'alcoxysilane utilisé étant dans un rapport molaire de 2 à 500:1.

2. Procédé selon la revendication 1,
**caractérisée en ce qu'**
on règle le pH dans le milieu réactionnel à une valeur comprise entre 2 et 12.

3. procédé selon la revendication 1 ou 2,
**caractérisé en ce que**
dans la combinaison (iii) on utilise comme acide faible l'acide formique, l'acide acétique, l'acide proprionique ou l'acide citrique.

4. Procédé selon l'une au moins des revendications 1 à 3,
**caractérisée en ce qu'**
on utilise comme sel acide un sulfate acide de métal alcalin ou un phosphate diacide de métal alcalin, ou l'acétate d'aluminium.

5. Procédé selon au moins l'une des revendications 1 à 4,
**caractérisée en ce qu'**
on utilise comme sel basique l'hydroxyde de magnésium ou un acétate
de métal alcalin ou un carbonate de métal alcalin ou un hydrogénocarbonate de métal alcalin.

6. Procédé selon au moins l'une des revendications 1 à 5,
**caractérisé en ce qu'**
on utilise l'alcool correspondant au groupe alcoxy de l'organosilane utilisé.

7. Procédé selon au moins l'une des revendications 1 à 6,
**caractérisé en ce qu'**
on utilise comme le méthanol, l'éthanol, le n-propanol, le i-propanol, le n-butanol, le i-butanol, le t-butanol et/ou le 2-méthoxyéthanol.

8. Utilisation de compositions contenant un siloxane fluoroorganofonctionnel à base d'alcool obtenues selon le procédé des revendications 1 à 7 pour l'hydrophobisation et l'oléophobisation simultanées, ainsi que pour la protection des bâtiments et des façades contre les salissures et les colorants, de surfaces, de matières plastiques, de métaux, de matériaux de construction minéraux, des bâtiments et des façades. pour l'enduction des fibres de verre, pour la silanisation des charges et de pigments, pour l'amélioration des propriétés rhéologiques des dispersions et des émulsions de polymères, pour l'hydrophobisation et l'oléophobisation ainsi que pour la protection des textiles, du cuir, des produits cellulosiques et d'amidon contre les salissures et les colorants, ainsi que comme agent de séparation, comme agent rétlculant, comme agent favorisant l'adhérence ainsi que comme additifs pour les peintures et les vernis.
